# FASCICULE DE BREVET EUROPEEN

(11) **EP 2 036 252 B1**
(45) Date de publication et mention de la délivrance du brevet: **10.08.2011**
(21) Numéro de dépôt: 07803890.8
(22) Date de dépôt: 19.06.2007
(51) Int. Cl.: H04L 12/24

(54) **PROCEDE DE CONFIGURATION D'UN TERMINAL MULTI RESEAUX ET TERMINAL MULTI-RESEAUX ASSOCIE**
VERFAHREN ZUR KONFIGURATION EINES MULTINETZWERK-ENDGERÄTES UND ENTSPRECHENDES MULTINETZWERK-ENDGERÄT
METHOD OF CONFIGURING A MULTI-NETWORK TERMINAL AND ASSOCIATED MULTI-NETWORK TERMINAL

(30) Priorité: 03.07.2006 FR 0652764
(43) Date de publication de la demande: 18.03.2009
(73) Titulaire: FRANCE TELECOM, 75015 Paris (FR)
(72) Inventeur: AUVRAY, Vincent, 50460 Tonneville (FR); BAUBAN, Patrick, F-75013 Paris (FR)
(86) Numéro de dépôt international: PCT/FR2007/051463
(87) Numéro de publication internationale: WO 2008/003882

(56) Documents cités:
- US-A1- 2006 120 329
- HAO-HUA CHU ET AL: "Challenges: wireless web services" 7 juillet 2004 (2004-07-07), PARALLEL AND DISTRIBUTED SYSTEMS, 2004. ICPADS 2004. PROCEEDINGS. TENTH INTERNATIONAL CONFERENCE ON NEWPORT BEACH, CA, USA 7-9 JULY 2004, PISCATAWAY, NJ, USA,IEEE, PAGE(S) 657-664 , XP010710658 ISBN: 0-7695-2152-5 page 4 page 7
- RUIZ P M ET AL: "Adaptive multimedia multi-party communication in ad hoc environments" 5 janvier 2004 (2004-01-05), SYSTEM SCIENCES, 2004. PROCEEDINGS OF THE 37TH ANNUAL HAWAII INTERNATIONAL CONFERENCE ON 5-8 JAN. 2004, PISCATAWAY, NJ, USA,IEEE, PAGE(S) 293-302 , XP010682893 ISBN: 0-7695-2056-1 page 6, colonne de gauche, alinéa 1

## Description

### DOMAINE TECHNIQUE

La présente invention concerne les télécommunications, et plus particulièrement les terminaux de télécommunications multi-réseaux.

### ETAT DE LA TECHNIQUE

Certains terminaux de télécommunications sont adaptés pour communiquer dans plusieurs réseaux de télécommunications, basés respectivement sur des protocoles de communications différents.

Ainsi, un terminal de ce type peut, par exemple, communiquer sur un réseau de télécommunications de type GSM ("Global System for Mobile communications") et sur un réseau de type WiFi ("Wireless Fidelity").

Un terminal de ce type peut donc accéder à une pluralité de services qui lui sont offerts dans la pluralité de réseaux dans lesquels il peut communiquer.

A cet effet, pour un réseau de télécommunications d'un type donné, par exemple GSM, les terminaux de télécommunications actuels comprennent une interface de communication configurée pour communiquer avec le réseau GSM, cette interface de communication comprenant elle-même une pluralité d'interfaces d'accès aux services susceptibles d'être offerts dans le réseau GSM. De telles interfaces d'accès consistent par exemple en un logiciel client de messagerie électronique, un logiciel client de navigation Internet, un logiciel client de messagerie instantanée, etc.....

Chacun des logiciels clients précités possèdent une configuration spécifique qui, sans intervention manuelle, demeure statique dans le temps.

On entend par configuration un ensemble de paramètres qui sont fonction du type de réseau de télécommunications (mobile, fixe, sans fil, etc..), des éléments d'interconnexion qui le composent (antennes, stations de base, routeurs, etc...) et du type de services offerts dans un type de réseau déterminé (messagerie Instantanée, navigation Internet, etc...).

Par exemple, un logiciel client de navigation Internet peut ou non utiliser un serveur proxy pour accéder aux contenus d'un réseau de télécommunications. Dans le cas par exemple où un tel réseau est du type WiFi, la configuration du client de navigation Internet a besoin d'être modifiée manuellement, selon que le terminal de télécommunications équipé d'un tel logiciel est connecté à un réseau WiFi de type entreprise ou à un réseau Wifi de type domestique. Une telle modification s'avère nécessaire en raison du fait que le terminal précité accède au réseau Wifi d'entreprise via un serveur proxy, ce qui n'est pas le cas lorsque ce même terminal accède au réseau Wifi domestique.

Une telle modification à l'initiative de l'utilisateur s'avère fastidieuse et compliquée, en particulier pour un utilisateur non technophile, et cela compte tenu du nombre croissant de réseaux de télécommunications et de services différents auxquels peuvent avoir accès les terminaux d'aujourd'hui.

US2008/0120329 décrit les interfaces d'accès à des réseaux, tels qu'en particulier WiBro et CDMA et non à des services.
US2006/0120329 décrit les interfaces d'accès à des réseaux, tels qu'en particulier WiBro et CDMA, et non à des services.

### BUT DE L'INVENTION

Un but de la présente invention est de configurer un terminal de télécommunications, en temps réel et sans intervention manuelle, en fonction du type de réseau auquel le terminal est connecté et du service auquel ce terminal souhaite accéder.

L'invention propose ainsi un procédé de configuration d'un terminal de télécommunications susceptible de communiquer avec une pluralité de réseaux de télécommunications offrant respectivement une pluralité de services de télécommunications, le terminal comprenant une pluralité d'interfaces d'accès aux services offerts, ledit procédé étant caractérisé en ce que lorsque le terminal accède à l'un des services offerts, via l'un des réseaux, le procédé comprend les étapes suivantes :
- a) déterminer le type de réseau avec lequel le terminal est en cours de connexion,
- b) activer l'interface d'accès associée au service auquel le terminal est destiné à accéder,
- c) requérir, au niveau de l'interface d'accès activée, des paramètres de configuration qui sont fonction de l'interface d'accès activée et du réseau en cours de connexion,
- d) extraire, au niveau d'un module de centralisation de paramètres de configuration, les paramètres de configuration requis,
- e) obtenir, au niveau de l'interface d'accès activée, les paramètres de configuration extraits.

Grâce à ces dispositions, les terminaux multi-réseaux acquièrent ainsi une plus grande souplesse de fonctionnement lors de leur accès à un service offert dans un réseau. Une telle souplesse est due en particulier au stockage centralisé dans ces terminaux de tous les paramètres de configuration susceptibles d'être sélectionnés par ces terminaux, en fonction, d'une part, d'un réseau donné auquel ils se connectent, et d'autre part, du service auquel ils sont destinés à accéder dans ce réseau donné.

La gestion des paramètres de configuration par le terminal est en conséquence nettement améliorée.

Dans des modes de réalisation du procédé selon l'invention, on a recours à l'une ou l'autre des dispositions suivantes :
- l'étape a) de détermination de type de réseau est effectuée soit au moment du démarrage du terminal, soit lorsqu'une modification intervient relativement au réseau connecté;
- l'étape a) de détermination du type de réseau et l'étape c) de requête des paramètres de configuration sont effectuées manuellement.

Cette dernière disposition a pour avantage de permettre à l'utilisateur de configurer son terminal, de façon simple et rapide, en fonction du type de réseau auquel il souhaite se connecter et du type de service auquel il souhaite accéder dans ledit réseau.

D'un point de vue utilisateur, l'ergonomie d'utilisation du terminal s'en trouve ainsi nettement améliorée.

Un autre aspect de l'invention se rapporte à un terminal de télécommunications susceptible de communiquer avec une pluralité de réseaux de télécommunications offrant respectivement une pluralité de services de télécommunications, ledit terminal comprenant une pluralité d'interfaces d'accès auxdits services offerts, ledit terminal étant caractérisé en ce qu'il comprend :
- a) des moyens de détermination du type de réseau avec lequel le terminal est en cours de connexion,
- b) des moyens d'activation de l'interface d'accès associée audit service auquel le terminal est destiné à accéder,
- c) des moyens de requête de paramètres de configuration qui sont fonction de ladite interface d'accès activée et dudit réseau en cours de connexion,
- d) des moyens d'extraction desdits paramètres de configuration requis à partir d'un module de centralisation de paramètres de configuration,
- e) des moyens d'obtention desdits paramètres de configuration extraits.

Dans un mode de réalisation du terminal selon l'invention, ce dernier comprend des moyens de sélection manuelle pour sélectionner, d'une part, le type de réseau auquel le terminal est destiné à se connecter, et, d'autre part, des paramètres de configuration associés audit réseau à connecter et au service auquel le terminal est destiné à accéder dans ledit réseau.

Les avantages procurés par le terminal multi-réseaux précité étant similaires à ceux procurés par le procédé introduit précédemment, ils ne seront pas rappelés ici.

Dans un mode particulier de réalisation, les différentes étapes du procédé de configuration sont déterminées par des instructions de programmes d'ordinateurs.

En conséquence, l'invention vise aussi un programme d'ordinateur sur un support d'informations, ce programme étant susceptible d'être mis en oeuvre dans un terminal de télécommunications du type précité, ou plus généralement dans un ordinateur, ce programme comportant des instructions adaptées à la mise en oeuvre des étapes d'un procédé de configuration tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

D'autres particularités et avantages de la présente invention apparaîtront dans la description ci-après d'un exemple de réalisation non limitatif, en référence aux dessins annexés, dans lesquels:
- la figure 1 est un schéma fonctionnel du terminal multi-réseaux dans un mode de réalisation selon l'invention;
- la figure 2 représente une table de données dans laquelle figurent les différents paramètres de configuration susceptibles d'être adoptés par le terminal de la figure 1,
- la figure 3 représente, sous forme d'organigramme, les principales étapes d'un procédé de configuration mis en oeuvre dans le terminal de la figure 1.

### DESCRIPTION DETAILLEE

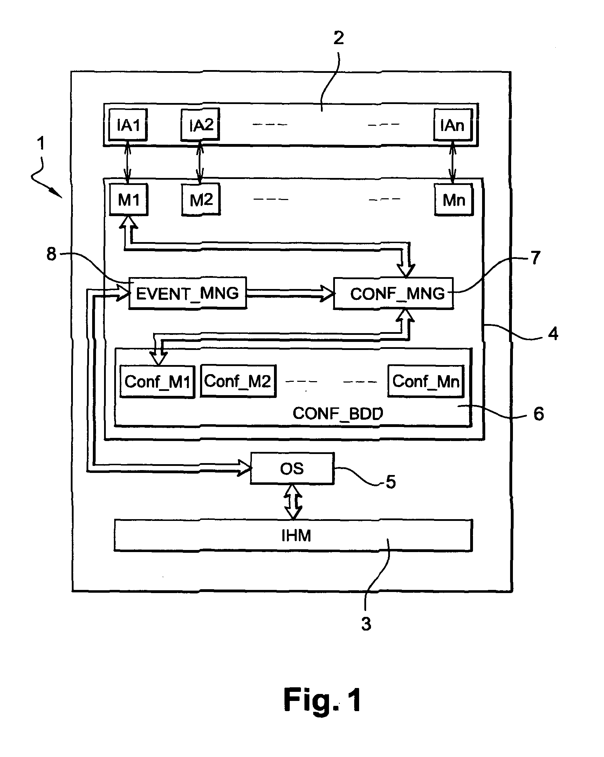

La figure 1 représente un terminal de télécommunications 1 conforme à l'invention.

Le terminal 1 comprend de façon classique une interface 2 de communication avec une pluralité de réseaux de télécommunications. Dans l'exemple représenté, le terminal 1 est bi-réseaux, c'est-à-dire que le terminal 1 est destiné à se connecter soit à un premier réseau (non représenté), par exemple GSM, soit à un second réseau (non représenté), par exemple WiFi.

L'interface de communication 2 comprend une pluralité d'interfaces d'accès IA1...IAn. Il s'agit d'interfaces graphiques qui sont destinées, comme mentionné précédemment, à permettre au terminal 1 d'accéder aux services susceptibles d'être offerts dans le réseau GSM ou WiFi.

Dans une application particulière, non limitative, l'une des interfaces d'accès, par exemple l'interface IA1, consiste en un logiciel client permettant l'envoi ou la réception de messages courts de type SMS ("Short Message Service").

Le terminal 1 a aussi une interface homme-machine (IHM) 3 qui comprend de façon classique un écran d'affichage, un haut-parleur, un microphone, un clavier et des circuits électroniques de commande associés.

Selon l'invention, le terminal 1 est équipé d'un gestionnaire 4 des paramètres de configuration du terminal 1 qui est destiné à fournir, sur requête du terminal 1, les paramètres de configuration qui sont associés au réseau et au service auxquels est destiné à accéder le terminal 1.

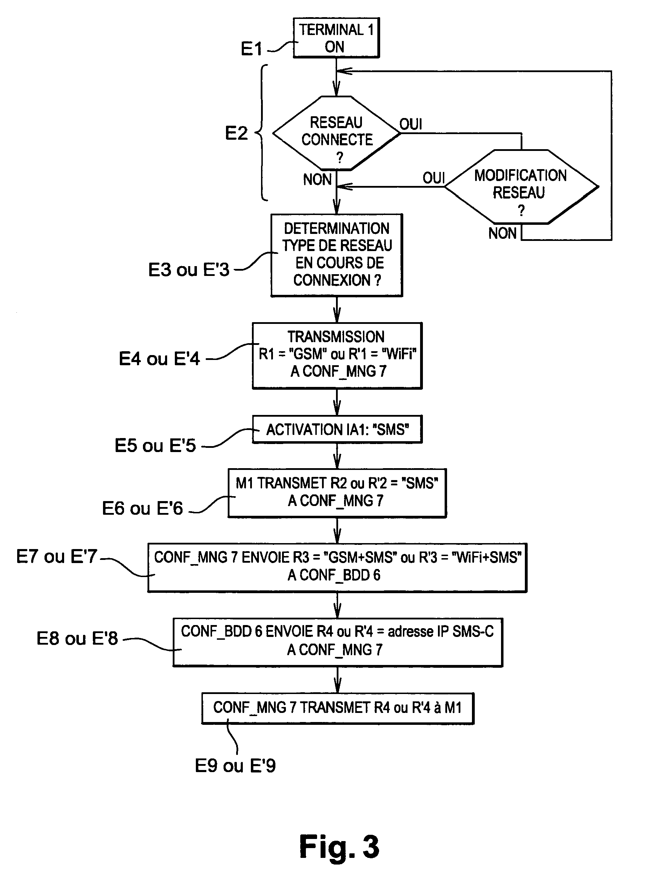

Le gestionnaire de paramètres de configuration 4 consiste typiquement en un programme d'ordinateur installé dans le terminal 1 lors de sa fabrication, ou chargé à distance dans celui-ci. Le programme 4 comporte des instructions pour exécuter les étapes du procédé de configuration dont l'organigramme est donné à la figure 3. Le programme 4 est exécuté par un processeur (non représenté) qui est installé dans le système d'exploitation OS 5.

Plus précisément, le gestionnaire de paramètres de configuration 4 comprend une pluralité de modules logiciels applicatifs M1, M2, ..., Mn auxquels sont associées respectivement les interfaces d'accès IA1, IA2..., IAn. Chacun de ces modules M1, M2,..., Mn est conçu pour mettre en oeuvre les méthodes de communication du réseau auquel le terminal 1 est connecté, et incorpore les différents protocoles utilisés lors de l'accès aux services offerts dans le réseau connecté.

Dans l'exemple représenté, lorsque le terminal 1 est connecté par exemple sur le réseau GSM, le module M1 met en oeuvre les méthodes de communication du réseau GSM, et incorpore les protocoles utiles à l'émission et à la réception de SMS.

Chaque module M1, M2,..., Mn fonctionne respectivement selon un nombre déterminé Conf_M1, Conf_M2,..., Conf_Mn de paramètres de configuration.

De tels paramètres sont stockés au préalable dans le terminal 1, soit en usine, soit à l'initiative des opérateurs de télécommunications. Ils consistent par exemple :
- dans l'adresse réseau de différents éléments d'interconnexion d'un réseau, telle que l'adresse IP ("Internet Protocol") d'un centre de service SMS (SMS-C :"Short Message Service Center"), l'adresse IP d'un serveur proxy, etc....
- dans l'identifiant utilisateur d'une messagerie électronique, d'une messagerie instantanée, etc...

D'une façon particulièrement avantageuse, l'ensemble des paramètres Conf_M1, Conf_M2,..., Conf_Mn est stocké de façon centralisée dans une base de données CONF_BDD désigné par la référence numérique 6 sur la figure 1. Ainsi, chaque interface d'accès IA1, IA2, ...IAn et son module logiciel applicatif associé M1, M2,..., Mn peuvent avoir accès et donc utiliser l'ensemble de paramètres précité.

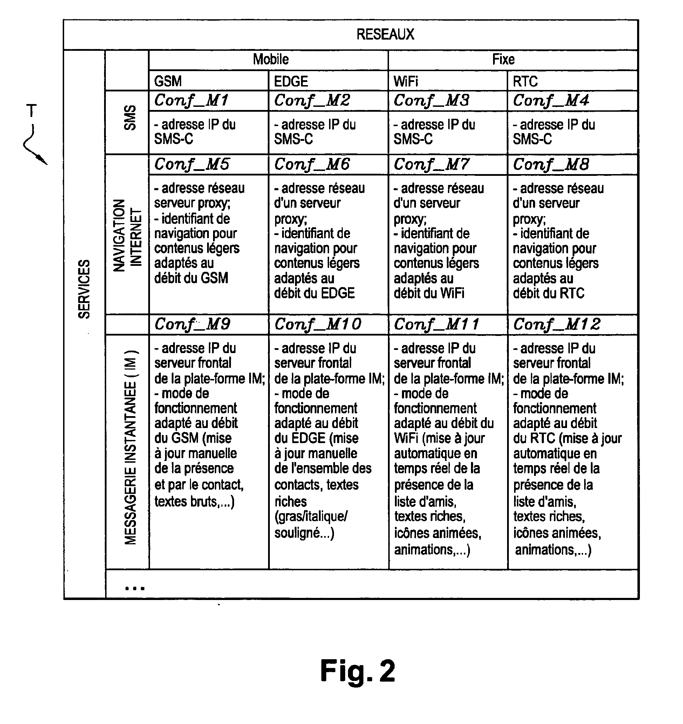

Comme on peut le voir en référence à la figure 2, l'ensemble de paramètres précité est stocké sous la forme d'une table de correspondance matricielle T :
- dont la première ligne indique le type de réseaux auquel le terminal 1 est destiné à être connecté;
- et dont la première colonne indique le type de services auquel est destiné à se connecter le terminal 1 dans un réseau d'un type donné.

Dans l'exemple représenté, le terminal 1 a la possibilité :
- de se connecter à deux types différents de réseaux mobiles, le GSM et l'EDGE ("Enhanced Data for GSM Evolution"), ainsi qu'à deux types de réseaux fixes, le WiFi et le RTC ("Réseau Téléphonique Commuté");
- et d'accéder à trois types différents de services dans chacun des réseaux précités, à savoir l'émission/réception de message SMS, la navigation Internet, la messagerie instantanée (IM).

Le terminal 1 est ainsi destiné à être configuré selon 12 ensembles de paramètres différents. Ces 12 ensembles de paramètres Conf_M1, Conf_M2, ... , Conf_M12 sont indiqués en caractère italique sur la figure 2.

En référence à nouveau à la figure 1, l'ensemble de paramètres précité est rendu accessible au moyen d'un module logiciel applicatif CONF_MNG, désigné par la référence numérique 7 sur la figure 1, dont la fonction est d'interroger la base de données CONF_BDD 6 afin d'extraire, parmi l'ensemble des paramètres de configuration précité qui y est stocké, le nombre déterminé de paramètres Conf_M1, Conf_M2....ou Conf_Mn tel que demandés par une interface d'accès IA1, IA2,...ou IAn et son module logiciel applicatif associé M1, M2,...ou Mn.

Le terminal 1 comprend, pour finir, un module de gestion des événements EVENT_MNG qui est désigné par la référence numérique 8 sur la figure 1. Un tel module 8 permet de connaître en temps réel l'état du réseau auquel est connecté le terminal 1, en interrogeant le système d'exploitation 5 qui récupère, de façon connue en soi, les informations sur l'état du réseau, à partir de l'interface homme-machine 3. Le module EVENT_MNG 8 est ensuite destiné à informer le module de gestion des configurations CONF_MNG 7, lorsqu'une modification intervient dans l'un des réseaux auquel est connecté le terminal 1.

Une telle modification peut consister en une modification à l'intérieur même du réseau, telle que par exemple un changement de cellule, une coupure dans le réseau, etc...mais aussi en un basculement d'un réseau à un autre.

On va maintenant décrire, en référence aux figures 1 à 3, un procédé de configuration mis en oeuvre par le terminal 1, dans le cadre de l'accès, par ce dernier, au service d'émission/réception de messages SMS, via, soit le réseau GSM, soit le réseau WiFi.

Au cours d'une étape E1, on procède à l'allumage du terminal 1 (état ON).

Au cours d'une étape E2, le module de gestion des événements EVENT_MNG 8 interroge alors le système d'exploitation 5 pour déterminer si le terminal 1 est déjà connecté soit au réseau GSM, soit au réseau WiFi.

Si ce n'est pas le cas, au cours d'une étape E3, le module de gestion des événements EVENT_MNG 8 interroge à nouveau le système d'exploitation 5 pour déterminer si le terminal 1 est en cours de connexion avec l'un des deux réseaux, GSM ou WiFi. Si c'est effectivement le cas, le système d'exploitation 5 récupère cette information auprès de l'interface homme-machine 3 et la retransmet au module EVENT_MNG 8. Dans l'exemple représenté, le réseau en cours de connexion par défaut est le GSM. L'information est contenue dans un message R1 envoyé par le système d'exploitation 5, sous la forme d'une balise du type *réseau="GSM".*

Au cours d'une étape E4, le module EVENT_MNG 8 transmet cette balise R1 au module CONF_MNG 7.

Au cours d'une étape E5, l'interface d'accès IA1 au service d'émission/réception de SMS est activée.

Au cours d'une étape E6, le module M1, associé à l'interface d'accès IA1, envoie une requête R2 auprès du module CONF_MNG 7 pour obtenir les paramètres de configuration pour le service envisagé dans le réseau déterminé. Une telle requête se présente par exemple sous la forme : *<GetConfiguration module= "SMS "* /*>.*

Au cours d'une étape E7, le module CONF_MNG 7 envoie une requête R3 auprès de la base de données CONF_BDD 6, ladite requête comprenant l'information relative au réseau connecté "GSM" et l'information relative au service "SMS". Un croisement de ces paramètres est alors effectué dans la base de données CONF_BDD 6 de façon à extraire l'ensemble de paramètres Conf_M1dans la table de correspondance T de la figure 2.

Au cours d'une étape E8, la base de données CONF_BDD 6 envoie alors un message R4 au module CONF_MNG 7, ledit message contenant la valeur de l'adresse IP du centre de service SMS-C dans le réseau GSM.

Au cours d'une étape E9, le module CONF_MNG 7 retransmet le message R4 au module M1 qui commande alors l'interface d'accès IA1, de façon à terminer son activation et être ensuite utilisée pour l'émission/réception de SMS dans le réseau GSM.

De façon particulièrement avantageuse, des étapes E'3 à E'8, similaires aux étapes E3 à E8 précitées, sont également effectuées dans le cas où à l'étape E2, une modification intervient relativement au réseau GSM. Dans l'exemple représenté, une telle modification consiste en l'appairage, par le terminal 1, au réseau Wifi.

Au cours de l'étape E'3, le module de gestion des événements EVENT_MNG 8 interroge le système d'exploitation 5 pour déterminer avec lequel des deux réseaux, GSM ou WiFi, le terminal 1 est en cours de connexion. Le système d'exploitation 5 renvoie alors au module EVENT_MNG 8 un message R'1 sous la forme d'une balise du type *réseau= "WiFi ".*

Au cours de l'étape E'4, le module EVENT_MNG 8 transmet cette balise R'1 au module CONF_MNG 7.

Au cours de l'étape E'5, l'interface d'accès IA1 au service d'émission/réception de SMS est activée.

Au cours de l'étape E'6, le module M1, associé à l'interface d'accès IA1, envoie une requête R'2 auprès du module CONF_MNG 7 pour obtenir les paramètres de configuration pour le service envisagé dans le réseau déterminé. Une telle requête se présente par exemple sous la forme : *<GetConfiguration module="SMS"*/*>.*

Au cours de l'étape E'7, le module CONF_MNG 7 envoie une requête R'3 auprès de la base de données CONF_BDD 6, ladite requête comprenant l'information relative au réseau connecté "WiFi" et l'information relative au service "SMS". Un croisement de ces paramètres est effectué dans la base de données CONF_BDD 6 de façon à extraire l'ensemble de paramètres Conf_M3 dans la table de correspondance T de la figure 2.

Au cours de l'étape E'8, la base de données CONF_BDD 6 envoie alors un message R'4 au module CONF_MNG 7, ledit message contenant l'adresse IP du centre de service SMS-C dans le réseau WiFi.

Au cours d'une étape E'9, le module CONF_MNG 7 retransmet le message R'4 au module M1 qui commande alors l'interface d'accès IA1 de façon à terminer son activation et être ensuite utilisée pour l'émission/réception de SMS dans le réseau WiFi.

Grâce au procédé de configuration qui vient d'être décrit ci-dessus, le terminal 1 est configuré en temps réel en fonction du type de réseau auquel il est connecté et du type de service auquel il est destiné à accéder, et cela même dans le cas d'une modification relative au réseau connecté.

Une configuration manuelle de certaines des étapes précitées est par ailleurs envisageable par l'utilisateur.

Lorsque ce dernier souhaite accéder à un service donné, tel que par exemple l'émission/réception de messages SMS, il sélectionne, via le clavier (non représenté) du terminal 1, l'élément intitulé par exemple "paramètres SMS" qui figure dans une liste de paramètres associés chacun à un service de télécommunications. Une telle liste est affichée sur l'écran (non représenté) du terminal 1, dans un menu intitulé par exemple "Services". Une fenêtre s'affiche alors sur l'écran du terminal 1, sur laquelle figure:
- une première liste indiquant le type de réseau (GSM, EDGE, WiFi RTC...) auquel l'utilisateur souhaite se connecter via son terminal 1,
- une seconde liste indiquant les paramètres de configuration associés à chaque type de réseau (adresse IP du centre de service SMS-C).

L'utilisateur sélectionne dans chacune des première et seconde listes les éléments qui l'intéressent, par exemple "GSM" dans la première liste et l'adresse IP: 215.52.36.10 qui correspond à celle du centre de service SMS-C dans le réseau GSM.

Une telle sélection a pour effet d'activer la base de données CONF_BDD 6 de façon à extraire l'ensemble de paramètres Conf_M1 dans la table de correspondance T de la figure 2.

La base de données CONF_BDD 6 envoie alors un message au module CONF_MNG 7, ledit message contenant la valeur précitée de l'adresse IP du centre de service SMS-C dans le réseau GSM, qui a été sélectionnée manuellement par l'utilisateur.

Le module CONF_MNG 7 retransmet ledit message au module M1 qui commande alors l'interface d'accès IA1 de façon à terminer son activation et être ensuite utilisée pour l'émission/réception de SMS dans le réseau GSM.

Le terminal 1 est ainsi configuré aisément à l'initiative de l'utilisateur et est prêt à émettre/recevoir des messages SMS dans le réseau GSM.

Une telle sélection par menu, ainsi que les différentes étapes associées, sont exécutées dans un module logiciel applicatif spécifique installé dans le terminal 1.

## Revendications

1. Procédé de configuration d'un terminal de télécommunications (1) susceptible de communiquer avec une pluralité de réseaux de télécommunications offrant respectivement une pluralité de services de télécommunications, ledit terminal comprenant une pluralité d'interfaces d'accès (IA1, IA2,..., IAn) auxdits services offerts, , via l'un desdits réseaux, ledit procédé comprend les étapes suivantes, lorsque le terminal accède à l'un des services offerts:
- a) déterminer le type de réseau avec lequel le terminal est en cours de connexion,
- b) activer l'une desdites interfaces d'accès (IA1 ou IA2 ou...IAn) à un service correspondant à celui auquel le terminal est destiné à accéder,
ledit procédé étant **caractérisé en ce qu'**il comprend en outre les étapes suivantes :
- c) requérir, au niveau de ladite interface d'accès au service activée, des paramètres de configuration (Conf_M1 ou Conf_M2 ou...Conf_Mn) qui sont fonction de ladite interface d'accès au service activée et dudit réseau en cours de connexion,
- d) extraire, au niveau d'un module de centralisation de paramètres de configuration (6), lesdits paramètres de configuration requis,
- e) obtenir, au niveau de ladite interface d'accès au service activée, lesdits paramètres de configuration extraits.

2. Procédé selon la revendication 1, dans lequel l'étape a) de détermination de type de réseau est effectuée soit au moment du démarrage du terminal, soit lorsqu'une modification intervient relativement au réseau connecté.

3. Procédé selon la revendication 1 ou la revendication 2, dans lequel l'étape a) de détermination du type de réseau et l'étape c) de requête des paramètres de configuration sont effectuées manuellement.

4. Terminal de télécommunications (1) susceptible de communiquer avec une pluralité de réseaux de télécommunications offrant respectivement une pluralité de services de télécommunications, ledit terminal comprenant une pluralité d'interfaces (IA1, IA2,...,IAn) d'accès auxdits services offerts, ledit terminal comprenant :
- a) des moyens (8) de détermination du type de réseau avec lequel le terminal est en cours de connexion,
- b) des moyens d'activation de l'interface d'accès (IA1, IA2 ou....IAn) à un service correspondant à celui auquel le terminal est destiné à accéder,
ledit terminal étant **caractérisé en ce qu'**il comprend en outre:
- c) des moyens (M1 ou M2 ou...Mn) de requête de paramètres de configuration qui sont fonction de ladite interface d'accès au service activée et dudit réseau en cours de connexion,
- d) des moyens (7) d'extraction desdits paramètres de configuration requis à partir d'un module de centralisation de paramètres de configuration (6),
- e) des moyens d'obtention desdits paramètres de configuration extraits.

5. Terminal selon la revendication 4, comprenant en outre des moyens de sélection manuelle pour sélectionner, d'une part, le type de réseau auquel le terminal est destiné à se connecter, et, d'autre part, des paramètres de configuration associés audit réseau à connecter et au service auquel le terminal est destiné à accéder dans ledit réseau.

6. Programme d'ordinateur à installer dans un terminal de télécommunications susceptible de communiquer avec une pluralité de réseaux de télécommunications offrant respectivement une pluralité de services de télécommunications, ledit terminal comprenant une pluralité d'interfaces d'accès auxdits services offerts, ledit programme comprenant des instructions pour mettre en oeuvre les étapes du procédé de configuration selon la revendication 1 ou 2, lors d'une exécution du programme par des moyens de traitement dudit terminal.

7. Support d'enregistrement lisible par un ordinateur sur lequel est enregistré un programme d'ordinateur comprenant des instructions pour mettre en oeuvre les étapes du procédé de configuration selon la revendication 1 ou 2.

## Claims

1. Method of configuring a telecommunication terminal (1) capable of communicating with a plurality of telecommunication networks respectively offering a plurality of telecommunication services, said terminal comprising a plurality of access interfaces (IA1, IA2, ..., IAn) providing access to said services offered, via one of said networks; said method comprises the following steps, when the terminal accesses one of the services offered:
- a) determining the type of network with which the terminal is currently connected,
- b) activating one of said access interfaces (IA1 or IA2 or ... IAn) providing access to a service corresponding to the one which the terminal is intended to access,
said method being **characterized in that** it also comprises the following steps:
- c) requesting, at the level of said access interface providing access to the activated service, configuration parameters (Conf_M1 or Conf_M2 or ... Conf_Mn) which are dependent on said access interface providing access to the activated service and on said network currently connected,
- d) extracting, at the level of a module for centralizing configuration parameters (6), said requested configuration parameters,
- e) obtaining, at the level of said access interface providing access to the activated service, said extracted configuration parameters.

2. Method according to Claim 1, in which the step a) for determining the network type is performed either at the time when the terminal is started up, or when a modification occurs relating to the connected network.

3. Method according to Claim 1 or Claim 2, in which the step a) for determining the network type and the step c) for requesting the configuration parameters are performed manually.

4. Telecommunication terminal (1) capable of communicating with a plurality of telecommunication networks respectively offering a plurality of telecommunication services, said terminal comprising a plurality of access interfaces (IA1, IA2, ..., IAn) providing access to said services offered, said terminal comprising:
- a) means (8) for determining the type of network with which the terminal is currently connected,
- b) means for activating the access interface (IA1, IA2 or ... IAn) providing access to a service corresponding to the one which the terminal is intended to access,
said terminal being **characterized in that** it also comprises:
- c) means (M1 or M2 or ... Mn) for requesting configuration parameters which are dependent on said access interface providing access to the activated service and said network currently connected,
- d) means (7) for extracting said requested configuration parameters from a module for centralizing configuration parameters (6),
- e) means for obtaining said extracted configuration parameters.

5. Terminal according to Claim 4, also comprising manual selection means for selecting, on the one hand, the type of network to which the terminal is intended to connect, and, on the other hand, configuration parameters associated with said network to be connected and with the service which the terminal is intended to access in said network.

6. Computer program to be installed in a telecommunication terminal capable of communicating with a plurality of telecommunication networks respectively offering a plurality of telecommunication services, said terminal comprising a plurality of access interfaces providing access to said services offered, said program comprising instructions for implementing the steps of the configuration method according to Claim 1 or 2, during an execution of the program by processing means of said terminal.

7. Computer-readable storage medium on which is stored a computer program comprising instructions for implementing the steps of the configuration method according to Claim 1 or 2.

## Patentansprüche

1. Verfahren zur Konfiguration eines Telekommunikationsendgeräts (1), das mit mehreren Telekommunikationsnetzwerken kommunizieren kann, die je mehrere Telekommunikationsdienste anbieten, wobei das Endgerät mehrere Zugriffsschnittstellen (IA1, IA2, ..., IAn) auf die angebotenen Dienste über eines der Netzwerke enthält, wobei das Verfahren die folgenden Schritte enthält, wenn das Endgerät auf einen der angebotenen Dienste zugreift:
- a) Bestimmen des Netzwerktyps, mit dem das Endgerät verbunden ist,
- b) Aktivieren einer der Zugriffsschnittstellen (IA1 oder IA2 oder ... IAn) auf einen Dienst entsprechend demjenigen, auf den das Endgerät zugreifen soll,
wobei das Verfahren **dadurch gekennzeichnet ist, dass** es außerdem die folgenden Schritte enthält:
- c) Anfordern, auf der Ebene der aktivierten Zugriffsschnittstelle auf den Dienst, von Konfigurationsparametern (Conf_M1 oder Conf_M2 oder ... Conf_Mn), die von der aktivierten Zugriffsschnittstelle auf den Dienst und vom verbundenen Netzwerk abhängen,
- d) Entnahme, auf der Ebene eines Zentralisierungsmoduls von Konfigurationsparametern (6), der angeforderten Konfigurationsparameter,
- e) Erhalt, auf der Ebene der aktivierten Zugriffsschnittstelle auf den Dienst, der entnommenen Konfigurationsparameter.

2. Verfahren nach Anspruch 1, bei dem der Schritt a) der Bestimmung des Netzwerktyps entweder zum Zeitpunkt des Startens des Endgeräts oder dann durchgeführt wird, wenn eine Veränderung bezüglich des verbundenen Netzwerks auftritt.

3. Verfahren nach Anspruch 1 oder Anspruch 2, bei dem der Schritt a) der Bestimmung des Netzwerktyps und der Schritt c) der Anforderung der Konfigurationsparameter manuell ausgeführt werden.

4. Telekommunikationsendgerät (1), das mit mehreren Telekommunikationsnetzwerken kommunizieren kann, die je mehrere Telekommunikationsdienste anbieten, wobei das Endgerät mehrere Zugriffsschnittstellen (IA1, IA2, ..., IAn) auf die angebotenen Dienste enthält, wobei das Endgerät enthält:
- a) Einrichtungen (8) zur Bestimmung des Netzwerktyps, mit dem das Endgerät verbunden ist,
- b) Einrichtungen zur Aktivierung der Zugriffsschnittstelle (IA1, IA2 oder ... IAn) auf einen Dienst entsprechend demjenigen, auf den das Endgerät zugreifen soll,
wobei das Endgerät **dadurch gekennzeichnet ist, dass** es außerdem enthält:
- c) Einrichtungen (M1 oder M2 oder ... Mn) zum Anfordern von Konfigurationsparametern, die von der aktivierten Zugriffsschnittstelle auf den Dienst und vom verbundenen Netzwerk abhängen,
- d) Einrichtungen (7) zur Entnahme der angeforderten Konfigurationsparameter ausgehend von einem Zentralisierungsmodul von Konfigurationsparametern (6),
- e) Einrichtungen zum Erhalt der entnommenen Konfigurationsparameter.

5. Endgerät nach Anspruch 4, das außerdem manuelle Auswahleinrichtungen enthält, um einerseits den Netzwerktyp, mit dem das Endgerät verbunden werden soll, und andererseits Konfigurationsparameter auszuwählen, die dem zu verbindenden Netzwerk und dem Dienst zugeordnet sind, auf den das Endgerät im Netzwerk zugreifen soll.

6. Computerprogramm, das in einem Telekommunikationsendgerät installiert werden soll, das mit mehreren Telekommunikationsnetzwerken kommunizieren kann, die je mehrere Telekommunikationsdienste anbieten, wobei das Endgerät mehrere Zugriffsschnittstellen auf die angebotenen Dienste enthält, wobei das Programm Anweisungen enthält, um die Schritte des Konfigurationsverfahrens nach Anspruch 1 oder 2 bei einer Ausführung des Programms durch Verarbeitungseinrichtungen des Endgeräts durchzuführen.

7. Computerlesbarer Aufzeichnungsträger, auf dem ein Computerprogramm aufgezeichnet ist, das Anweisungen enthält, um die Schritte des Konfigurationsverfahrens nach Anspruch 1 oder 2 durchzuführen.
